# EUROPÄISCHE PATENTSCHRIFT

(11) **EP 3 504 073 B1**
(45) Veröffentlichungstag und Bekanntmachung des Hinweises auf die Patenterteilung: **26.05.2021**
(21) Anmeldenummer: 17737276.0
(22) Anmeldetag: 10.07.2017
(51) Int. Cl.: B60G 17/08, B60G 17/0165

(54) **VERFAHREN ZUR ANSTEUERUNG DER SCHWINGUNGSDÄMPFER EINER RADAUFHÄNGUNG**
METHOD FOR ACTUATING THE VIBRATION DAMPER OF A WHEEL SUSPENSION
PROCÉDÉ DE COMMANDE DE L'AMORTISSEUR DE VIBRATIONS D'UNE SUSPENSION

(30) Priorität: 25.08.2016 DE 102016216008
(43) Veröffentlichungstag der Anmeldung: 03.07.2019
(73) Patentinhaber: Volkswagen Aktiengesellschaft, 38440 Wolfsburg (DE)
(72) Erfinder: BÄRECKE, Frank, 38444 Wolfsburg (DE); SHADDY, Khatab, 38356 Meinersen (DE); KUKLA, Stefan, 29339 Wathlingen (DE)
(86) Internationale Anmeldenummer: PCT/EP2017/067254
(87) Internationale Veröffentlichungsnummer: WO 2018/036709

(56) Entgegenhaltungen:
- WO-A1-2009/075151
- DE-A1- 10 344 053
- DE-A1-102010 018 902
- DE-A1-102012 022 367
- DE-A1-102015 202 405
- US-A1- 2002 045 977
- US-A1- 2010 207 343
- US-A1- 2014 303 844

## Beschreibung

Die Erfindung bezieht sich auf ein Verfahren zur Ansteuerung der Schwingungsdämpfer einer Kraftfahrzeug-Radaufhängung, umfassend ein Erzeugen von Daten, welche die Topographie der vor dem Kraftfahrzeug liegenden Fahrbahn repräsentieren, ein Auswerten der Daten im Hinblick auf Fahrbahnunebenheiten und ein Einstellen der Schwingungsdämpfer unter Berücksichtigung der Auswertung der Fahrbahnunebenheiten.

Ansteuerbare Schwingungsdämpfer ermöglichen im Unterschied zu passiven Schwingungsdämpfern im Fahrbetrieb eine Veränderung der Dämpfungsrate. Bei semi-aktiven Schwingungsdämpfern kann die Dämpferkraft durch Ansteuerung eines Überströmventils beeinflusst werden. Die hierfür aufgewendete Hilfsenergie dient dabei lediglich der Ventilansteuerung zum Zweck der Veränderung der Phasenlage der Energieaufnahme und Energieabgabe durch den Dämpfer. Bei aktiven Schwingungsdämpfern wird die Hilfsenergie hingegen dazu genutzt, um eine gewünschte Kraft in jede Richtung dämpfend abzuführen oder energieeinbringend zu erzeugen. Im Vergleich zu einem semi-aktiven Schwingungsdämpfer muss daher erheblich mehr Energie zur Ansteuerung bereitgestellt werden können, weswegen zumeist semi-aktive Schwingungsdämpfer als ansteuerbare Schwingungsdämpfer in Kraftfahrzeugradaufhängungen eingesetzt werden.

Ein ansteuerbarer Schwingungsdämpfer ist beispielsweise in DE 10 2008 053 007 A1 beschrieben. Mittels einer auf prädiktiven Sensorsignalen beruhenden Ansteuerung wird an dem Schwingungsdämpfer unter anderem ein "elektronischer" Endanschlag realisiert. Dabei wird ausgenutzt, dass bestimmte Informationen zeitlich im Voraus bekannt sind. Bei Kraftfahrzeugen erreichen Anregungen der Vorderachse nach einer bestimmten Zeit auch die Hinterachse. So kann beispielsweise anhand der Radbewegung der Vorderachse auf Hindernisse oder Straßenanregungen geschlossen werden, die entsprechend Fahrgeschwindigkeit und Radstand auch die Räder der Hinterachse anregen werden. Dies kann dazu genutzt werden, um die Dämpfung an den Schwingungsdämpfern der Hinterachse geeignet einzustellen. Für die Schwingungsdämpfer der Vorderachse ist dies hingegen nicht ohne weiteres möglich.

Weiterhin ist aus DE 10 2012 218 937 A1 ein System bekannt, bei dem die vor dem Kraftfahrzeug liegende Fahrbahn für die Ansteuerung der Schwingungsdämpfer berücksichtigt wird. Dazu sind an dem Kraftfahrzeug mehrere Kameras vorgesehen, welche auf einen Bereich der Fahrbahn in etwa 1 bis 10 m vor dem Kraftfahrzeug gerichtet sind. Die aufgenommenen Bilddaten werden im Hinblick auf Fahrbahnunebenheiten ausgewertet. Dazu wird unter anderem vorgeschlagen, die Höhen von verschiedenen Abschnitten der bevorstehenden Straßenoberfläche mathematisch zu bewerten und eine bestimmte mathematische Beschreibung dieser Höhen bereitzustellen. Diese Beschreibung wird dann bei der Einstellung der Dämpfung der Schwingungsdämpfer berücksichtigt.

Ein ähnliches Verfahren zur vorausschauenden Fahrwerkseinstellung ist aus DE 10 2015 202 405 A1 bekannt. Bei diesem werden Teilbereiche des erfassten Fahrwegs nach der maximalen Amplitude klassifiziert. Die Ansteuerung der Dämpfer erfolgt dann in Abhängigkeit der Klassifizierung. Die DE 10 2015 202 405 A1 offenbart den Oberbegriff des Anspruchs 1.

Ein weiteres Verfahren, welches die vor dem Fahrzeug liegende Topographie für die Einstellung der Dämpfung der Schwingungsdämpfer berücksichtigt und mit Infrarotsignalen arbeitet, ist aus US 2014/0222287 A1 bekannt.

Ein grundlegendes Problem bei der Implementierung von Previewfunktionen auf Grundlage von Bilddaten besteht darin, dass die Genauigkeit der Fahrbahnabbildung mitunter unzureichend ist. Diese Ungenauigkeit schlägt sich unmittelbar im Fahrkomfort nieder.

Der Erfindung liegt die Aufgabe zu Grunde, hier Abhilfe zu schaffen. Insbesondere zielt die Erfindung darauf ab, eine im Hinblick auf den Fahrkomfort effizientere und harmonischere Previewfunktion für die Ansteuerung der Schwingungsdämpfer einer Kraftfahrzeug-Radaufhängung bereitzustellen.

Diese Aufgabe wird durch ein Verfahren gemäß Patentanspruch 1 gelöst.

Durch eine solche Voraberfassung der Schwingungsanregung des Kraftfahrzeugs durch die Fahrbahn kann ein Dämpferregler für den zu überfahrenden Fahrbahnabschnitt eine komfortable sowie fahrsichere Dämpfung der Schwingungsdämpfer genauer einstellen. Aufgrund der stochastischen Berücksichtigung der Fahrbahnunebenheiten ergibt sich im Vergleich zu Verfahren, welche die genaue Lage einzelner Fahrbahnanregungen berücksichtigen, eine Verbesserung des Komfortverhaltens, da Ungenauigkeiten bei der Fahrbahnabbildung weniger stark ins Gewicht fallen.

Vorteilhafte Ausgestaltungen der Erfindung sind Gegenstand weiterer Patentansprüche.

So kann beispielsweise aus dem Amplitudenspektrum eine gewichtete Amplitude ermittelt werden und die Vorgabe für Dämpfung der Schwingungsdämpfer in Abhängigkeit der ermittelten gewichteten Amplitude erfolgen. Dies gestattet es, für das Dämpfungsverhalten besonders relevante Frequenzbereiche besonders zu berücksichtigen.

Insbesondere ist es hierdurch möglich, den Zielkonflikt zwischen einer gewünschten hohen Dämpfung in einem begrenzten Bereich um die Aufbaueigenfrequenz und einer möglichst geringen Dämpfung für Frequenzen außerhalb dieses Bereichs abzumildern. Sind die Amplituden im Bereich außerhalb der Aufbaueigenfrequenz hoch, so wird die Vorgabe für die Dämpfung zurückgenommen. Ähnliches gilt analog für den Bereich der Radeigenfrequenzen.

In einem ersten Schritt können bei der Gewichtung lediglich Frequenzen oberhalb der Aufbaueigenfrequenz des Kraftfahrzeugs betrachtet werden. Diese können entweder alle gleich oder gegebenenfalls auch unterschiedlich gewichtet werden.

Weiterhin können für die Vorgabe der Dämpfung die Amplituden in einem beschränkten Bereich um die Aufbaueigenfrequenz und die Amplituden außerhalb des Bereichs der Aufbaueigenfrequenz verglichen werden, worauf zu größeren Amplituden im Bereich der Aufbaueigenfrequenz hin die Dämpfung tendenziell erhöht, zu kleineren Amplituden im Bereich der Aufbaueigenfrequenz hin die Dämpfung hingegen tendenziell vermindert wird.

Hierdurch können einerseits Eigenbewegungen des Fahrzeugaufbaus möglichst schnell abklingen. Andererseits wird verhindert, dass Stöße der Fahrbahn möglichst weich aufgefangen und nicht in den Fahrzeugaufbau eingeleitet werden.

Entsprechend ist es im Hinblick auf Anregungen im Bereich der Radeigenfrequenzen möglich, für die Vorgabe der Dämpfung die Amplituden in einem beschränkten Bereich um die Radeigenfrequenz und die Amplituden außerhalb des Bereichs der Radeigenfrequenz zu vergleichen und zu größeren Amplituden im Bereich der Radeigenfrequenz hin die Dämpfung tendenziell zu erhöhen, zu kleineren Amplituden im Bereich der Radeigenfrequenz hin die Dämpfung hingegen tendenziell zu vermindern.

Ferner ist eine Wichtung der Dämpfung für den Bereich der Aufbaueigenfrequenz und den Bereich der Radeigenfrequenz möglich, wobei aufbau- und radfrequente Anregungen grundsätzlich auch negativ gewichtet werden können. Eine stärkere Gewichtung der aufbaufrequenten Anregungen führt vorrangig zu einem komfortableren Verhalten, wohingegen eine stärkere Gewichtung der radfrequenten Anteile tendenziell zu einem fahrsichereren Verhalten führt.

Die vorstehend erläuterte Berücksichtigung der Fahrbahnunebenheiten vor dem Fahrzeug wird vorzugsweise zur Vorsteuerung der Dämpfung der Schwingungsdämpfer in Kombination mit ansonsten konventionellen Dämpferregelung eingesetzt.

Insbesondere kann an einem Fahrzeug zur Ansteuerung der Schwingungsdämpfer die Vertikalbewegung des Fahrzeugaufbaus erfasst und unter Berücksichtigung dieser Vertikalbewegung eine Vorgabe für die Dämpfung der Schwingungsdämpfer erzeugt werden. Diese Vorgabe aus der Vertikalbewegung sowie die Vorgabe aus der Auswertung der Fahrbahnunebenheiten können fahrsituationsabhängig gegeneinander gewichtet werden. Die Dämpfung der Schwingungsdämpfer wird dann in Abhängigkeit dieser Wichtung eingestellt.

Dabei kann in einer Fahrsituation mit großen Fahrbahnunebenheiten und geringer Vertikalbewegung des Fahrzeugaufbaus die Vorgabe aus der Auswertung der Fahrbahnunebenheiten stärker gewichtet wird. In anderen Fällen kann die Dämpfung auf der Grundlage der Vorgabe aus der Vertikalbewegung eingestellt werden. Zudem sind Einstellzustände möglich, welche auf einer Kombination beider Vorgaben beruhen.

Nachfolgend wird die Erfindung anhand eines in der Zeichnung dargestellten Ausführungsbeispiels näher erläutert. Die Zeichnung zeigt in:
- Figur 1: eine schematische Darstellung eines Kraftfahrzeugs mit einem System zur Ansteuerung der Schwingungsdämpfer einer Radaufhängung desselben,
- Figur 2: ein erstes Ausführungsbeispiel für ein Verfahren zur Ansteuerung der Schwingungsdämpfer,
- Figur 3: ein Beispiel für ein Amplitudenspektrum,
- Figur 4: eine erste Ausführungsvariante zur Auswertung des Amplitudenspektrums,
- Figur 5: eine zweite Ausführungsvariante zur Auswertung des Amplitudenspektrums, und in
- Figur 6: ein dritte Ausführungsvariante zur Auswertung des Amplitudenspektrums.

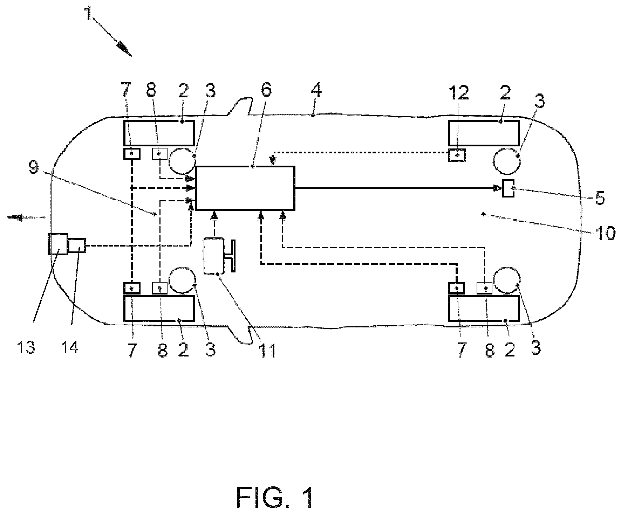

Figur 1 zeigt ein Kraftfahrzeug 1, dessen Radaufhängung je Fahrzeugrad 2 einen ansteuerbaren Schwingungsdämpfer 3 aufweist, über den das jeweilige Fahrzeugrad 2 gegen einen Fahrzeugaufbau 4 abgestützt ist. Die ansteuerbaren Schwingungsdämpfer 3 können als semi-aktive oder aktive Schwingungsdämpfer ausgeführt sein. In Figur 1 ist beispielhaft für einen semi-aktiven Schwingungsdämpfer dessen zugehöriges Steuerventil 5 angedeutet. Die Ansteuerung der Schwingungsdämpfer 3 im Hinblick auf die Dämpfungsrate erfolgt durch ein Steuergerät 6, das beispielsweise wie in DE 10 2008 053 007 A1 beschrieben ausgebildet sein kann.

Am Fahrzeugaufbau 2 sind beispielhaft drei Beschleunigungssensoren 7 angeordnet. Diese können ohne Beschränkung hierauf als Vertikalbeschleunigungssensoren ausgeführt sein. Aus deren Lage am Fahrzeugaufbau 2 sowie aufgrund der Kenntnis der Geometrie des Fahrzeugs lassen sich damit für jeden Punkt am Fahrzeug aus den Signalen der Beschleunigungssensoren 7 die Vertikalbeschleunigung errechnen und dadurch Informationen über das Wank- und Rollverhalten des Fahrzeugs erhalten. Es ist jedoch auch möglich, die Beschleunigung des Fahrzeugaufbaus im Bereich eines ausgewählten Schwingungsdämpfers 3 auch über andere am Fahrzeug verbaute Sensoren zu generieren.

Figur 1 zeigt ferner drei Niveausensoren 8, welche jeweils einem der Schwingungsdämpfer 2 zur Erfassung der Niveaulage zugeordnet sind. Vorliegend sind zwei Niveausensoren den Schwingungsdämpfern 2 der Vorderachse 9 des Kraftfahrzeugs 1 und ein Niveausensor 8 einem der Schwingungsdämpfer 2 der Hinterachse 10 des Kraftfahrzeugs 1 zugeordnet. Der Niveausensor 8 der Hinterachse 10 ist im Bereich des linken Hinterrads angeordnet, kann jedoch auch auf der anderen Achsseite fahrzeugradnah untergebracht oder beispielsweise auch in Achsmitte angeordnet sein. Eine andere Anordnungsweise der drei Niveausensoren 8 ist ebenfalls möglich. In einer Abwandlung kann auch je Fahrzeugrad 2 ein Niveausensor vorhanden sein, wie dies in DE 10 2008 053 007 A1 beschrieben ist.

Weiterhin ist ein an dem Kraftfahrzeug 1 ein Lenkwinkelsensor 11 vorhanden, mit dem der vom Fahrer am Lenkrad vorgegebene Lenkwinkel erfasst wird.

An dem Fahrzeug sind ferner Raddrehzahlsensoren 12 für die einzelnen Fahrzeugräder vorgesehen, von denen in Figur 1 lediglich der Raddrehzahlsensor 12 für das rechte Hinterrad dargestellt ist.

Ferner ist an dem Kraftfahrzeug 1 mindestens eine Kamera 13 angeordnet, welche auf die Fahrbahn vor dem Kraftfahrzeug 1 gerichtet ist. Diese erfasst vorzugsweise einen Bereich der Fahrbahn etwa 1 bis 20 m vor dem Kraftfahrzeug 1.

Die Signale dieser Sensoren werden in dem Steuergerät 6 verarbeitet, welches dazu dient, die Dämpfung der einzelnen Schwingungsdämpfer 3 einzustellen, d.h. die Dämpfungsrate der einzelnen Schwingungsdämpfer je nach Bedarf vorzugeben. Hierbei kann auf die in DE 10 2008 053 007 A1 beschriebenen Konzepte zurückgegriffen werden. Der diesbezügliche Offenbarungsgehalt von DE 10 2008 053 007 A1 wird ausdrücklich hier miteinbezogen.

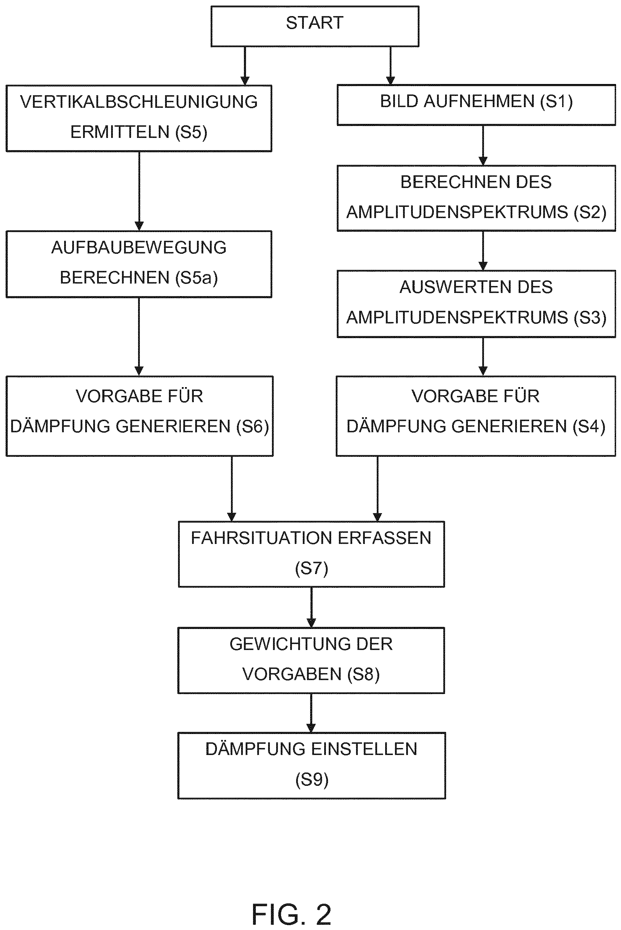

Die Kamera 13 erzeugt Daten, welche die Topographie der vor dem Kraftfahrzeug liegenden Fahrbahn repräsentieren (vgl. Schritt S1 in Fig. 2). Vorliegend werden dazu von der Kamera 13 fortlaufend aufgenommene Bilder mit Methoden der Bilddatenverarbeitung ausgewertet. Letzteres kann entweder im Steuergerät 6 oder in einem mit diesem verbundenen separaten Kamerasteuergerät 14 erfolgen.

Zur Erfassung der Fahrbahnoberfläche können auch andere Messprinzipien zum Einsatz kommen. Als Kamera 13 wird vorliegend daher auch jedwede Einrichtung verstanden, welche zum Erzeugen von Abbildern der vor dem Kraftfahrzeug liegenden Fahrbahn geeignet ist.

Mit dem vorstehend erläuterten System lässt sich das nachfolgend anhand von Figur 2 näher erläuterte Verfahren zur Ansteuerung der Schwingungsdämpfer 3 bewerkstelligen.

Dieses basiert auf der Grundüberlegung, dass eine verstärkte Dämpfung im Bereich einer Resonanzfrequenz vorteilhaft ist, sich jedoch außerhalb einer Resonanzfrequenz nachteilig auswirkt. Bei Anregungen im Bereich der Aufbaueigenfrequenz und der Radeigenfrequenz tritt eine Resonanzüberhöhung auf. Hier führt eine höhere Dämpfung zu geringeren Schwingungsamplituden. Wird das Fahrzeug in diesem Frequenzbereich angeregt, ist eine höhere Dämpfung zu empfehlen, um ein Aufschaukeln der Schwingungen zu verhindern. Im Bereich zwischen der Aufbaueigenfrequenz und der Radeigenfrequenz führt eine verstärkte Dämpfung hingegen zu höheren Anregungsamplituden des Fahrzeugaufbaus, was in der Regel unerwünscht ist.

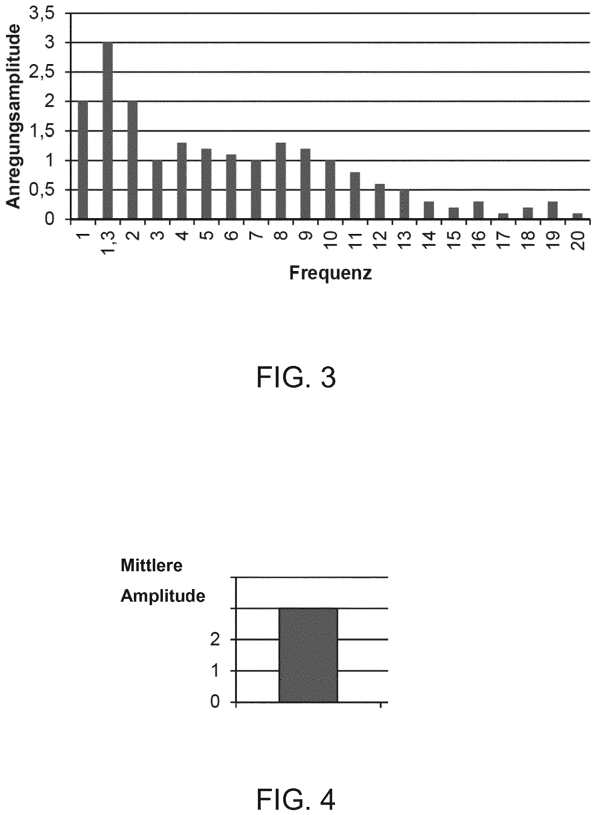

Die von der Kamera 13 aufgezeichneten Daten werden fortlaufend im Hinblick auf Fahrbahnunebenheiten ausgewertet (vgl. Schritt S2 in Fig. 2). Hierbei werden insbesondere die Anregungsamplituden, welche aus Erhebungen und Vertiefungen resultieren, so wie die Abstände zwischen diesen erfasst, um zusätzlich zu den Anregungsamplituden auch die zugehörigen Wellenlängen der Fahrbahnanregung zu bestimmen. Mithilfe der Fahrgeschwindigkeit kann aus den Wellenlängen die jeweilige Anregungsfrequenz ermittelt werden, so dass sich für die aufgezeichneten Daten ein Amplitudenspektrum in Abhängigkeit der Frequenz ermitteln lässt, wie dies beispielhaft in Figur 3 dargestellt ist.

Das in Figur 3 beispielhaft dargestellte Amplitudenspektrum zeigt die mittleren Amplituden für definierte Frequenzbereiche, so dass sich ein diskontinuierliches Spektrum gibt. Es ist jedoch gleichermaßen möglich, die Anregungsamplitude über der Frequenz als kontinuierliches Spektrum darzustellen.

Mit dem Amplitudenspektrum liegt somit eine Information über die bevorstehende Anregung des Kraftfahrzeugs 1 durch die vor diesem liegende Fahrbahn vor. Üblicherweise sind für ein Kraftfahrzeug dessen Aufbaueigenfrequenz sowie dessen Radeigenfrequenz bekannt. Die Aufbaueigenfrequenz eines Kraftfahrzeugs liegt üblicherweise im Bereich von etwa 0,8 bis 2 Hz. Die Radeigenfrequenz liegt üblicherweise im Bereich von etwa 10 bis 15 Hz. Anhand des Amplitudenspektrums kann somit grundsätzlich festgestellt werden, ob die Anregungen verstärkt im Bereich der genannten Eigenfrequenzen oder in Bereichen außerhalb dieser Eigenfrequenzen auftreten. Wie eingangs ausgeführt, ist es im Hinblick auf den Fahrkomfort sowie für die Fahrsicherheit zweckmäßig, Anregungen im Bereich der Eigenfrequenzen möglichst stark zu dämpfen, außerhalb dieser Bereiche die Dämpfung an den Schwingungsdämpfern 3 jedoch möglichst weich einzustellen, um entsprechende Stöße der Fahrbahnanregung nicht in den Fahrzeugaufbau einzuleiten. Es besteht somit bei unterschiedlichen Anregungsfrequenzen und -amplituden ein Zielkonflikt. Die Kenntnis des Amplitudenspektrums ermöglicht es, die Dämpfung der Schwingungsdämpfer 3 im Hinblick auf die bevorstehende Anregung durch die Fahrbahn besser einzustellen, wobei je nach Bedarf eine entsprechende Wichtung zwischen Fahrkomfort und Fahrsicherheit vorgenommen werden kann. Hierbei werden unabhängig von der Wichtung qualitativ bessere Ergebnisse erzielt, als bei Auswertungen, welche für die Vorgabe der Dämpfung auf Einzelereignisse im Fahrweg oder lediglich auf Durchschnittsamplituden abstellen.

In Abhängigkeit des Amplitudenspektrums wird schließlich eine Vorgabe für die Dämpfung der Schwingungsdämpfer 3 erzeugt (vgl. Schritt S4 in Figur 2). Hierfür können im Steuergerät 6 geeignete Algorithmen abgelegt werden, ohne dass die Erfindung hier auf eine bestimmte Vorgehensweise beschränkt wäre. Weiter unten werden lediglich beispielhaft einige Möglichkeiten hierfür aufgezeigt werden.

Das vorstehend erläuterte Verfahren wird vorzugsweise als vor Steuerung für eine herkömmliche Dämpferregelung eingesetzt. Letztere beruht beispielsweise darauf, die Vertikalbewegung des Fahrzeugaufbaus zu erfassen (vgl. Schritt S5 in Figur 2) und unter Berücksichtigung dieser Vertikalbewegung, welche beispielsweise aus der erfassten Vertikalbeschleunigung errechnet werden kann (vgl. Schritt S5a), eine Vorgabe für die Dämpfung der Schwingungsdämpfer 3 zu erzeugen (vgl. Schritt S6 in Figur 2). So kann die Dämpfung beispielsweise proportional zur vertikalen Aufbau- oder Dämpfergeschwindigkeit vorgegeben werden.

Unter Berücksichtigung der jeweiligen Fahrsituation, die in Schritt S7 erfasst wird, wird anschließend entschieden, welcher Vorgabe und gegebenenfalls in welchem Umfang gefolgt werden soll, d.h. es werden die Vorgabe aus der Vertikalbewegung sowie die Vorgabe aus der Auswertung der Fahrbahnunebenheiten fahrsituationsabhängig gegen einander gewichtet (vgl. Schritt S8). Im Extremfall kann dies auch bedeuten, dass eine der Vorgaben die andere ausschließt. In Abhängigkeit einer solchen Wichtung wird schließlich die Dämpfung der Schwingungsdämpfer 3 eingestellt. Hierzu werden beispielsweise im Steuergerät 6 entsprechende Ansteuersignale generiert und an die Steuerventile 5 der Schwingungsdämpfer 3 übermittelt (vgl. Schritt S9 in Figur 2).

Eine fahrtsituationsabhängige Wichtung kann beispielsweise darin bestehen, in einer Fahrsituation mit großen Fahrbahnunebenheiten und geringer Vertikalbewegung des Fahrzeugaufbaus die Vorgabe aus der Auswertung der Fahrbahnunebenheiten stärker zu gewichten. Hierfür können beispielsweise geeignet Schwellwerte vorgehalten werden. Andernfalls wird die Vorgabe aus der konventionellen Dämpferregelung stärker gewichtet.

Figur 4 zeigt nun eine erste Möglichkeit zur Auswertung des Amplitudenspektrums. Diese besteht darin, die mittlere Anregungsamplitude oberhalb der Aufbaueigenfrequenz zu ermitteln und in Abhängigkeit hiervon die Vorgabe für die Dämpfung zu bestimmen. Hierbei kann man sich auf einen Frequenzbereich oberhalb der Aufbaueigenfrequenz bis maximal etwa 20 Hz beschränken.

Eine sehr einfach Möglichkeit zur Vorgabe der Dämpfung besteht beispielsweise darin, über eine vorgegebene Kennlinie bei steigender Fahrbahnanregung die Dämpfung zu reduzieren.

Möchte man eine bestehende Aufbaubewegung dämpfen, kann diese Dämpfung in Abhängigkeit der überfahrenen Fahrbahnunebenheit reduziert werden, um den Eintrag von Stößen zu minimieren. Dies kann z.B. mit einem Kennfeld geschehen, was als Eingangsgröße einen Rohwert für die Dämpfung und die Fahrbahnanregung enthält und als Ausgang den neuen Dämpfungswert ausgibt. Wird vor dem Fahrzeug keine Fahrbahnunebenheit erkannt, so wird der Dämpfungswert nicht reduziert. Bei einer erkannten Fahrbahnunebenheit, wird die Dämpfung mit der Zunahme der Fahrbahnunebenheit reduziert.

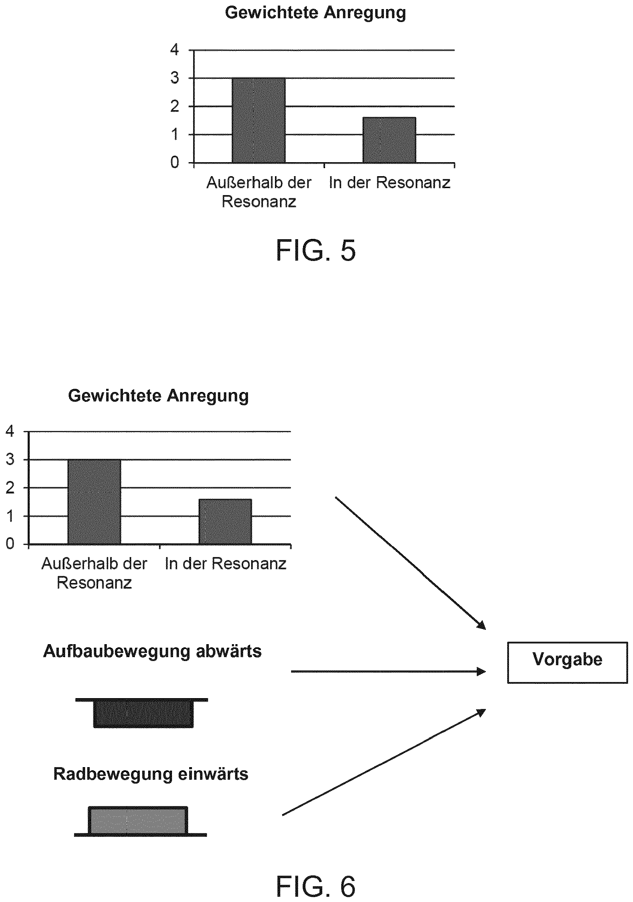

Figur 5 zeigt einen weiteren Ansatz, bei dem zwischen Anregungsamplituden in einem eng begrenzten Bereich um die Aufbaueigenfrequenz und/oder Radeigenfrequenz einerseits (Resonanzbereich) und einem Bereich außerhalb dieser Frequenzen (außerhalb der Resonanz) unterschieden wird. Für die Vorgabe der Dämpfung werden die Amplituden in den beschränkten Bereichen um die Aufbau-/Radeigenfrequenz und die Amplituden außerhalb des Bereichs der Aufbaueigenfrequenz verglichen. Dazu kann beispielsweise für jeden Bereich eine Vergleichsamplitude ermittelt werden. Zu größeren Amplituden im Bereich der Aufbau-/Radeigenfrequenz hin wird die Dämpfung tendenziell erhöht, zu kleineren Amplituden im Bereich der Aufbaueigenfrequenz hin die Dämpfung hingegen tendenziell vermindert. Durch eine entsprechende Wichtung der Frequenzbereiche entsprechend dem Dämpfungseinfluss kann eine bessere Dämpfung erzielt werden. Je nach Bedarf kann eine selektive Dämpfung auch lediglich auf den Bereich der Aufbaueigenfrequenz oder der Radeigenfrequenz begrenzt werden.

Figur 6 zeigt die Möglichkeit, zusätzlich zur Wichtung der Anregung die voraussichtliche Abwärtsbewegung des Fahrzeugaufbaus sowie das voraussichtliche Einfedern der Fahrzeugräder als weitere Kriterien für die Bestimmung der Vorgabe der Dämpfung aus der Fahrbahnanregung zu berücksichtigen.

Bei der Gewichtung der Dämpfung können aufbau- und radfrequente Anregungen gegebenenfalls auch negativ gewichtet werden. Dies führt zu einer höheren Dämpfung aufbau- und radfrequenter Anregungen. Dabei führt eine stärkere Gewichtung der aufbaufrequenten Anregungen vorrangig zu einem komfortableren Verhalten, eine stärkere Gewichtung der radfrequenter Anteile vorrangig zu einem fahrsichereren Verhalten.

Die Dämpfung sollte bei starker Fahrbahnanregung möglichst gering sein, um möglichst wenig Anregungen in den Fahrzeugaufbau einzuleiten. Dies gilt insbesondere für Anregungsfrequenzen außerhalb der Aufbaueigenfrequenz. Im Bereich von etwa 0,8 bis 2 Hz (entsprechend der Aufbaueigenfrequenz, Wankeigenfrequenz und Nickeigenfrequenz) und im Bereich der Radeigenfrequenz im Bereich von etwa 10-15 Hz würde eine zu geringe Dämpfung zu einer unerwünschten Resonanzverstärkung führen. Um dies zu berücksichtigen, kann eine gewichtete Fahrbahnanregung derart ermittelt werden, dass Anregungen außerhalb der Resonanzfrequenzen positiv gewichtet werden. Anregungen in der Resonanzfrequenz können dann negativ gewichtet werden. Mit der Wichtung kann ein Unebenheitswert ermittelt werden. Stellt man die Dämpfung umgekehrt zu diesem Unebenheitswert ein, so fährt das Fahrzeug bei starker Anregung außerhalb der Resonanzfrequenzen mit einer geringen Dämpfung. Dadurch werden die Stöße nur minimal in den Aufbau eingeleitet. Liegt die Anregung im Bereich der Resonanzfrequenzen, fährt das Fahrzeug mit einer hohen Dämpfung über die Fahrbahn. Dadurch wird eine resonante Erhöhung der Amplituden weitestgehend minimiert. In einer besonderen Variante hiervon kann die Dämpfung umgekehrt proportional zu dem Unebenheitswert eingestellt werden.

Eine andere Variante besteht darin, die Anregungen bei der Eigenfrequenz und die Anregungen außerhalb der Eigenfrequenz separat zu ermitteln. Hierzu kann um jede Eigenfrequenz ein eng begrenzter Frequenzbereich betrachtet werden, welcher in Abhängigkeit der auftretenden Resonanzüberhöhung gewählt werden kann. Mit diesen Werten kann dann in einem Kennfeld die optimale Dämpfung bestimmt werden. Mit steigender resonanter Anregung wird eine höhere Dämpfung eingestellt, mit steigender Anregung außerhalb der Resonanz eine geringere Dämpfung. Liegen gleichzeitig hohe resonante und nicht resonante Anregungen vor, so ermöglicht ein solches Kennfeld das Einstellen eines situationsspezifisch optimalen Kompromisses.

Die Erfindung wurde vorstehend anhand von Ausführungsbeispielen und weiterer Abwandlungen näher erläutert. Insbesondere können technische Einzelmerkmale, welche oben im Kontext weiter Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist ausdrücklich nicht auf die beschriebenen Ausführungsbeispiele beschränkt, sondern umfasst alle durch die Patentansprüche definierten Ausgestaltungen.

### Bezugszeichenliste

- 1: Kraftfahrzeug
- 2: Fahrzeugrad
- 3: Schwingungsdämpfer
- 4: Fahrzeugaufbau
- 5: Steuerventil
- 6: Steuergerät
- 7: Beschleunigungssensor
- 8: Niveausensor
- 9: Vorderachse
- 10: Hinterachse
- 11: Lenkwinkelsensor
- 12: Raddrehzahlsensor
- 13: Kamera
- 14: Kamerasteuergerät

## Patentansprüche

1. Verfahren zur Ansteuerung der Schwingungsdämpfer einer Kraftfahrzeug-Radaufhängung, umfassend:
Erzeugen von Daten, welche die Topographie der vor dem Kraftfahrzeug liegenden Fahrbahn repräsentieren (S1),
Auswerten dieser Daten im Hinblick auf Fahrbahnunebenheiten, und
Einstellen der Schwingungsdämpfer unter Berücksichtigung der Auswertung der Fahrbahnunebenheiten,
**dadurch gekennzeichnet, dass**
aus den die Topographie der vor dem Kraftfahrzeug liegenden Fahrbahn repräsentierenden Daten, nämlich den aus Erhebungen und Vertiefungen resultierenden Anregungsamplituden und deren Abständen, und der Fahrgeschwindigkeit das Amplitudenspektrum der Fahrbahnunebenheiten ermittelt wird (S2, S3) und in Abhängigkeit dieses Amplitudenspektrums der Fahrbahnunebenheiten eine Vorgabe für die Dämpfung der Schwingungsdämpfer erzeugt wird (S4).

2. Verfahren nach Anspruch 1, **dadurch gekennzeichnet, dass** aus dem Amplitudenspektrum eine gewichtete Amplitude ermittelt wird und die Vorgabe für Dämpfung der Schwingungsdämpfer in Abhängigkeit der ermittelten gewichteten Amplitude erfolgt.

3. Verfahren nach Anspruch 1 oder 2, **dadurch gekennzeichnet, dass** bei der Gewichtung lediglich Frequenzen oberhalb der Aufbaueigenfrequenz des Kraftfahrzeugs betrachtet werden.

4. Verfahren nach einem der Ansprüche 1 oder 2, **dadurch gekennzeichnet, dass** für die Vorgabe der Dämpfung die Amplituden in einem beschränkten Bereich um die Aufbaueigenfrequenz und die Amplituden außerhalb des Bereichs der Aufbaueigenfrequenz verglichen werden und zu größeren Amplituden im Bereich der Aufbaueigenfrequenz hin die Dämpfung tendenziell erhöht, zu kleineren Amplituden im Bereich der Aufbaueigenfrequenz hin die Dämpfung hingegen tendenziell vermindert wird.

5. Verfahren nach einem der Ansprüche 1, 2 oder 4, **dadurch gekennzeichnet, dass** für die Vorgabe der Dämpfung die Amplituden in einem beschränkten Bereich um die Radeigenfrequenz und die Amplituden außerhalb des Bereichs der Radeigenfrequenz verglichen werden und zu größeren Amplituden im Bereich der Radeigenfrequenz hin die Dämpfung tendenziell erhöht, zu kleineren Amplituden im Bereich der Radeigenfrequenz hin die Dämpfung hingegen tendenziell vermindert wird.

6. Verfahren nach Anspruch 4 oder 5, **dadurch gekennzeichnet, dass** ein Kennfeld für die Dämpfung vorgegeben ist, welches zwei Eingangsgrößen verwendet, nämlich die Anregungen bei Eigenfrequenz und die Anregungen außerhalb der Eigenfrequenz.

7. Verfahren nach einem der Ansprüche 1 bis 6, **dadurch gekennzeichnet, dass** die Vertikalbewegung des Fahrzeugaufbaus erfasst (S5) und unter Berücksichtigung dieser Vertikalbewegung eine Vorgabe für die Dämpfung der Schwingungsdämpfer erzeugt wird (S6), und
die Vorgabe aus der Vertikalbewegung (S6) sowie die Vorgabe aus der Auswertung der Fahrbahnunebenheiten (S4) fahrsituationsabhängig gegen einander gewichtet werden (S8) und die Dämpfung der Schwingungsdämpfer in Abhängigkeit dieser Wichtung eingestellt wird (S9).

8. Verfahren nach Anspruch 7, **dadurch gekennzeichnet, dass** in einer Fahrsituation mit großen Fahrbahnunebenheiten und geringer Vertikalbewegung des Fahrzeugaufbaus die Vorgabe aus der Auswertung der Fahrbahnunebenheiten stärker gewichtet wird als die Vorgabe aus der Vertikalbewegung.

9. Verfahren nach einem der Ansprüche 1 bis 3, **dadurch gekennzeichnet, dass** eine gewichtete Fahrbahnanregung in Form eines Unebenheitswerts derart ermittelt wird, dass Anregungen außerhalb der Resonanzfrequenzen positiv gewichtet werden und Anregungen in der Resonanzfrequenz negativ gewichtet werden, und dass die Dämpfung umgekehrt zu dem Unebenheitswert eingestellt wird.

## Claims

1. Method for actuating the vibration dampers of a motor vehicle wheel suspension, comprising:
generating data representing the topography of the road ahead of the motor vehicle (S1),
analysing said data with regard to road unevenness, and
adjusting the vibration dampers while taking into account the analysis of the road unevenness,
**characterized in that**
the amplitude spectrum of the road unevenness is determined (S2, S3) from the data representing the topography of the road ahead of the motor vehicle, namely the stimulation amplitudes that result from protrusions and depressions and the intervals between them, and the driving speed, and a specification for the damping of the vibration dampers is produced (S4) as a function of this amplitude spectrum of the road unevenness.

2. Method according to Claim 1, **characterized in that** a weighted amplitude is determined from the amplitude spectrum and the specification for damping of the vibration dampers is carried out as a function of the determined weighted amplitude.

3. Method according to Claim 1 or 2, **characterized in that** during the weighting only frequencies above the natural frequency of the body of the motor vehicle are considered.

4. Method according to either of Claims 1 and 2, **characterized in that** for the specification of the damping the amplitudes in a limited range about the natural frequency of the body and the amplitudes outside the region of the natural frequency of the body are compared and at greater amplitudes in the region of the natural frequency of the body the damping tends to be increased, whereas by contrast at smaller amplitudes in the region of the natural frequency of the body the damping tends to be reduced.

5. Method according to one of Claims 1, 2 or 4, **characterized in that** for the specification of the damping the amplitudes in a limited range about the natural frequency of the wheels and the amplitudes outside the region of the natural frequency of the wheels are compared and at greater amplitudes in the region of the natural frequency of the wheel the damping tends to be increased, whereas by contrast at smaller amplitudes in the region of the natural frequency of the wheels the damping tends to be reduced.

6. Method according to Claim 4 or 5, **characterized in that** a characteristic field for the damping is specified, which uses two input variables, namely the stimulations at the natural frequency and the stimulations away from the natural frequency.

7. Method according to one of Claims 1 to 6, **characterized in that** the vertical movement of the vehicle body is detected (S5) and a specification for the damping of the vibration dampers is produced (S6) while taking into account said vertical movement, and
the specification from the vertical movement (S6) and the specification from the analysis of the road unevenness (S4) are weighted (S8) relative to each other depending on the driving situation and the damping of the vibration dampers is adjusted (S9) as a function of said weighting.

8. Method according to Claim 7, **characterized in that** in a driving situation with large road unevenness and small vertical movement of the vehicle body, the specification from the analysis of the road unevenness is more heavily weighted than the specification from the vertical movement.

9. Method according to one of Claims 1 to 3, **characterized in that** a weighted road stimulus in the form of an unevenness value can be determined such that stimulations away from the resonant frequencies are positively weighted and stimulations at the resonant frequency are negatively weighted, and that the damping is adjusted inversely relative to the unevenness value.

## Revendications

1. Procédé permettant de piloter les amortisseurs de vibrations d'une suspension de véhicule automobile, comprenant les étapes consistant à :
produire des données qui représentent la topographie de la chaussée se trouvant devant le véhicule automobile (S1),
évaluer des données quant à des irrégularités de la chaussée, et
régler les amortisseurs de vibrations en tenant compte de l'évaluation des irrégularités de la chaussée,
**caractérisé en ce qu'**à partir des données représentant la topographie de la chaussée se trouvant devant le véhicule automobile, notamment à partir des amplitudes d'excitation et de leurs distances résultant d'irrégularités et de creux, et à partir de la vitesse de déplacement, le spectre d'amplitude des irrégularités de la chaussée est établi (S2, S3), et en fonction de ce spectre d'amplitude des irrégularités de la chaussée, une spécification pour l'amortissement des amortisseurs de vibrations est produite (S4).

2. Procédé selon la revendication 1, **caractérisé en ce qu'**à partir du spectre d'amplitude, une amplitude pondérée est établie, et la spécification pour l'amortissement des amortisseurs de vibrations est effectuée en fonction de l'amplitude pondérée établie.

3. Procédé selon la revendication 1 ou 2, **caractérisé en ce que** seules des fréquences au-dessus de la fréquence propre de structure du véhicule automobile sont considérées pour la pondération.

4. Procédé selon l'une quelconque des revendications 1 ou 2, **caractérisé en ce que** les amplitudes dans une plage limitée autour de la fréquence propre de structure et les amplitudes en dehors de la plage de la fréquence propre de structure sont comparées pour la spécification de l'amortissement, et en allant vers des amplitudes supérieures dans la plage de la fréquence propre de structure, l'amortissement est généralement augmentée, en allant vers des amplitudes inférieures dans la plage de la fréquence propre de structure par contre, l'amortissement est généralement diminué.

5. Procédé selon l'une quelconque des revendications 1, 2 ou 4, **caractérisé en ce que** des amplitudes dans une plage limitée autour de la fréquence propre de roue et les amplitudes en dehors de la plage de la fréquence propre de roue sont comparées pour la spécification de l'amortissement, et en allant vers des amplitudes supérieures dans la plage de la fréquence propre de roue, l'amortissement est généralement augmenté, et en allant vers des amplitudes inférieures dans la plage de la fréquence propre de roue par contre, l'amortissement est généralement diminué.

6. Procédé selon la revendication 4 ou 5, **caractérisé en ce que** pour l'amortissement, un diagramme caractéristique est spécifié qui utilise deux grandeurs d'entrée, notamment les excitations à la fréquence propre et les excitations en dehors de la fréquence propre.

7. Procédé selon l'une quelconque des revendications 1 à 6, **caractérisé en ce que** le mouvement vertical de la structure de véhicule est détecté (S5), et en tenant compte de ce mouvement vertical, une spécification pour l'amortissement des amortisseurs de vibrations est produite (S6), et
la spécification issue du mouvement vertical (S6) ainsi que la spécification issue de l'évaluation des irrégularités de la chaussée (S4) sont pondérées l'une par rapport à l'autre en fonction de la situation de conduite (S8), et l'amortissement des amortisseurs de vibrations est réglé en fonction de cette pondération (S9) .

8. Procédé selon la revendication 7, **caractérisé en ce que** dans une situation de conduite avec de grandes irrégularités de la chaussée et un faible mouvement vertical de la structure de véhicule, la spécification issue de l'évaluation des irrégularités de la chaussée est pondérée plus fortement que la spécification issue du mouvement vertical.

9. Procédé selon l'une quelconque des revendications 1 à 3, **caractérisé en ce qu'**une excitation de chaussée pondérée est établie sous la forme d'une valeur d'irrégularité de telle sorte que des excitations en dehors des fréquences de résonance sont pondérées de manière positive, et des excitations à la fréquence propre sont pondérées de manière négative, et **en ce que** l'amortissement est réglé inversement à la valeur d'irrégularité.
